(19) **Europäisches Patentamt**

**European Patent Office**

**Office européen des brevets**

(11) **EP 1 107 016 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(51) Int Cl.:
*G01S 3/808* (2006.01)    *G01S 3/86* (2006.01)

(21) Anmeldenummer: **00122427.8**

(22) Anmeldetag: **13.10.2000**

(54) **Verfahren zur Detektion und Ortung von Zielen**

Method for detecting and locating targets

Procédé de détection et de localisation de cibles

(84) Benannte Vertragsstaaten:
**DE FR GB NL**

(30) Priorität: **02.12.1999 DE 19958188**

(43) Veröffentlichungstag der Anmeldung:
**13.06.2001 Patentblatt 2001/24**

(73) Patentinhaber: **Rheinmetall Defence Electronics GmbH**
**28309 Bremen (DE)**

(72) Erfinder:
• **Hermstrüwer, Günther**
**28832 Achim (DE)**
• **Knötsch, Rainer, Dr.**
**28832 Achim (DE)**

(74) Vertreter: **Thul, Hermann**
**Thul Patentanwaltsgesellschaft mbH**
**Rheinmetall Allee 1**
**40476 Düsseldorf (DE)**

(56) Entgegenhaltungen:
**DE-A- 3 035 757      DE-C- 19 542 871**
**US-A- 4 112 430      US-A- 5 216 640**
**US-A- 5 680 371**

**Beschreibung**

Die Erfindung betrifft ein Verfahren zur Detektion und Ortung von Zielen mit periodische Signale abstrahlenden, akustischen Signalquellen gemäß Patentanspruch 1.

Bei einem solchen Verfahren werden die Ziele durch herkömmliche Richtungsbildung im Zeit- oder Frequenzbereich erkannt, indem die Ausgangssignale der einzelnen elektroakustischen Wandler entsprechend ihrer Lage zur einfallenden Schallwelle zeitverzögert oder phasenverschoben und dann mit ihren Amplituden oder Empfangsleistungen für jede Richtung der einfallenden Schallwellen aufaddiert werden. In denjenigen Richtungen, in denen die Amplituden- oder Leistungssumme eine vorgegebene Schwelle überschreitet, wird ein Ziel erkannt und die Richtung als Zielpeilung ausgegeben. Wegen der großen Wellenlängen bei niedrigen Frequenzen sowohl im Wasserschall als auch im Luftschall sowie der begrenzten räumlichen Größe der Antenne für die meisten Anwendungen ergeben die niederfrequenten Geräuschanteile der Fahrzeuge breite Richtungskeulen. Dadurch wird die Richtungsbestimmung selbst für das lauteste Ziel recht ungenau und bei gleichzeitigem Empfang der Geräusche von mehreren Zielen ist die Erkennbarkeit und die Trennung der einzelnen Ziele stark eingeschränkt. Ein Beispiel für ein solches Verfahren ist in der US 5 216 640 beschrieben.

Der Erfindung liegt die Aufgabe zugrunde, die passive akustische Richtungsbildung für die Erkennung von Zielen mit geringem Signalverarbeitungsaufwand zu verbessern und sich hierzu die periodischen Signalanteile nutzbar zu machen, die in den von vielen Wasser-, Land- und Luftfahrzeugen, z.B. von deren Antrieben, abgestrahlten Geräuschen enthalten sind.

Die Aufgabe ist durch die Merkmale des Anspruchs 1 gelöst.

Das erfindungsgemäße Verfahren hat bereits durch die Beschränkung auf die Detektion von periodische Signale abstrahlenden Schallquellen im Frequenzbereich den Vorteil, daß das Hintergundgeräusch (Störleistung) eliminiert wird, die Anfälligkeit gegen Peak-Ereignisse, wie Knalle und Windböen, gering ist und daß das Verfahren insgesamt sehr robust ist. Durch die in drei aufeinderfolgenden Verarbeitungsstufen, nämlich Frequenzselektion von spektralen Linienmustern, Winkelselektion von schmalen Richtkeulen und Zielselektion von Frequenz-Richtungs-Signaturen erfolgende Extraktion jeweils der stärksten Peaks, das heißt der Peaks mit dem größten Signal-Stör-Verhältnis, ergibt sich auch bei kleinen akustischen Antennen eine wesentlich verbesserte Genauigkeit der Richtungsbestimmung. Durch die Bestimmung von nur zwei Parametern für jeden extrahierten Peak in jeder Verarbeitungsstufe, nämlich Größe und Lage des Peakmaximums, wird der Aufwand für die Signalverarbeitung deutlich reduziert; denn auch bei breiten Peaks wird nur das Maximum benutzt. Durch das Zusammenfassen aller extrahierten Peaks einer Richtung in dem Summen-Richtkeulen-Diagramm mit anschließender Extraktion der Peaks im Winkelbereich wird auch bei kleinen akustischen Antennen eine verbesserte Trennbarkeit von Zielen erreicht.

Aufgrund der mit dem erfindungsgemäßen Verfahren durchgeführten doppelten Filterung, nämlich der räumlichen Filterung (und des damit verbunden Antennengewinns) und der spektralen Filterung infolge der Schmalbandanalyse zur Extraktion der Spektrallinien (und des damit verbundenen Verarbeitungsgewinns) erhöht sich zusätzlich die Detektionsreichweite der akustischen Antenne.

Zweckmäßige Ausführungsformen des erfindungsgemäßen Verfahrens mit vorteilhaften Weiterbildung und Ausgestaltungen der Erfindung ergeben sich aus den weiteren Ansprüchen.

Die Erfindung ist anhand eines in der Zeichnung dargestellten Ausführungsbeispiels im folgenden näher beschrieben. Es zeigen:

Fig. 1 bis 3    ein Blockschaltbild mit Funktionsblöcken für die einzelnen Verarbeitungsschritte des Signalverarbeitungsverfahrens,

Fig. 4    ein Diagramm einer im Signalverarbeitungverfahren verwendeten Wichtungsfunktionen.

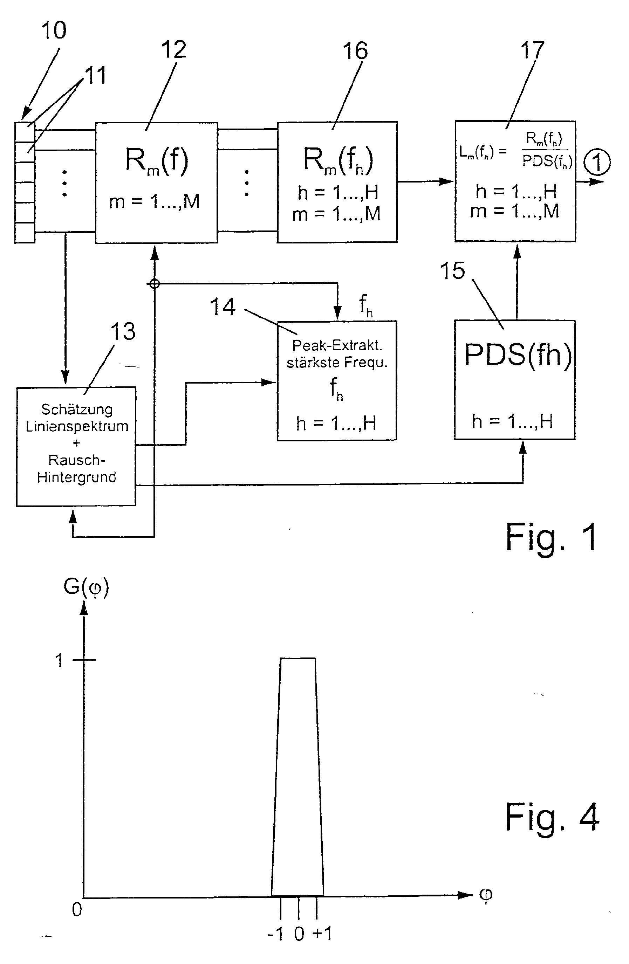

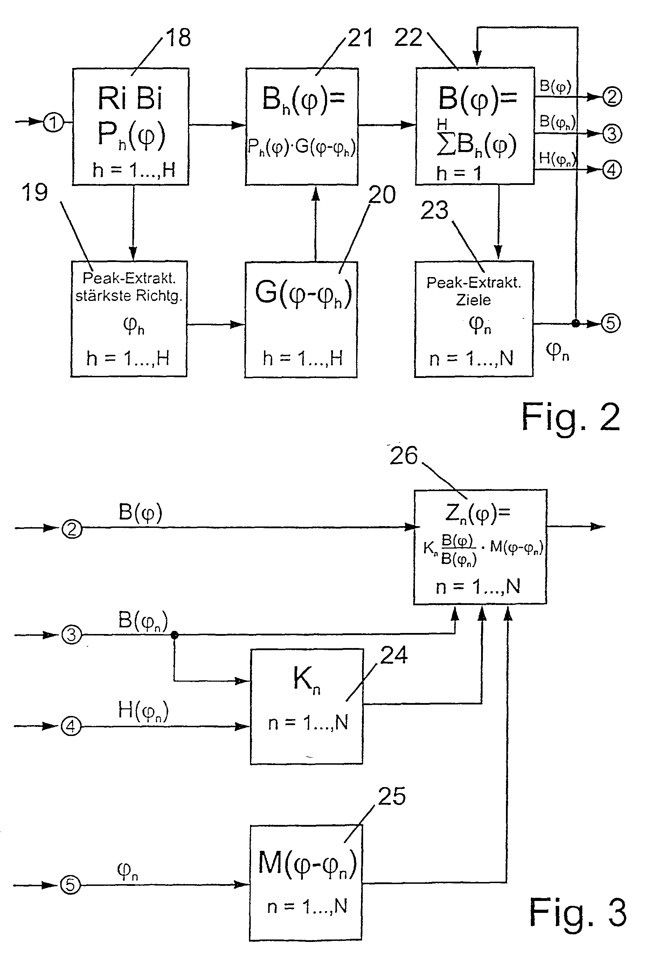

Zur Erläuterung des Verfahrens zur Detektion und Ortung von Zielen mit periodische Signale abstrahlenden akustischen Signalquellen ist in Fig. 1 bis 3 ein Blockschaltbild dargestellt, in dem die einzelnen Verfahrensschritte Funktionsblöcken zugeordnet sind, wobei sich das Blockschaltbild der Fig. 2 in Ziffer 1 an das Blockschaltbild der Fig. 1 und das Blockschaltbild der Fig. 3 in Ziffer 2 bis 5 an das Blockschaltbild gemäß Fig. 2 anschließt.

Mit einer Antenne 10, die eine Vielzahl von elektroakustischen Wandlern 11, z.B. Mikrofone zum Empfang von Luftschall oder Hydrofone zum Empfang von Wasserschall, aufweist, werden die von Zielen, z. B. von deren Antrieben, abgestrahlten akustischen Signale oder Geräusche empfangen, und die elektrischen Ausgangssignale der einzelnen Wandler 11 werden zur Zielextraktion einer Signalverarbeitung unterzogen, wie sie durch die Blockschaltbilder von Fig. 1 bis 3 illustriert ist. Dabei ist die Anzahl der elektroakustischen Wandler 11 mit M angenommen.

Im Einzelnen werden folgende Verarbeitungsschritte der Signalverarbeitung durchgeführt:

Im Block 12 wird mittels einer Fast Fourier Transformation (FFT) das Frequenzspektrum $R_m (f_h)$ von allen Ausgangssignalen der elektroakustischen Wandler 11 (m = 1 bis M) gebildet. Bei räumlich kleinen akustischen Antennen, wie sie z. B. bei Wasserschall von sogenannten Zylinderbasen gebildet werden, werden in dem Frequenzspektrum des Ausgangssignals eines einzigen Wandlers 11 die stärksten Peaks anhand der Größe und Lage des jeweiligen Maximums selektiert. Hierzu werden zunächst im einen Block 13 der breitbandige Rauschhintergrund und das Linienspektrum ohne den Rauschhintergrund ermittelt. Ein hierzu geeignetes, interaktives Verfahren zur Erkennung der Linienmuster und der Eliminierung der gegenseitigen Beeinflussung von Linien und Tauschspektrum ist in der DE 30 35 757 C2 angegeben. Das hier zu verwendende Normalisierungsfenster überdeckt nicht - wie dort - ein Winkelintervall, sondern ein Frequenzintervall. Im Übrigen läuft das interaktive Verfahren in gleicher Weise ab, wobei an die Stelle der Empfangswinkel die Empfangsfrequenzen zu setzen sind. Im Block 14 werden nunmehr die stärksten Peaks in dem Linienspektrum anhand der Größe und der Lage der jeweiligen Maxima selektiert und die Frequenzen der Maxima als Peak-Frequenzen $f_h$ extrahiert. Entsprechend der Zahl H der extrahierten Peaks ergeben sich H Frequenzen $f_h$. In dem Block 15 wird zu den extrahierten Peak-Frequenzen $f_h$ aus dem Block 13 die Stärke des jeweiligen Rauschhintergrundes $PDS(f_h)$ bestimmt und abgespeichert. Mit den in Block 14 extrahierten Peak-Frequenzen $f_h$ werden nunmehr im Block 12 in allen M Frequenzspektren $R_m(f_h)$ die den Peak-Frequenzen $f_h$ zugehörigen Peak-Spitzenwerte extrahiert und im Block 16 die Frequenzspektren mit den jeweils extrahierten H Peak Frequenzen $f_h$ für alle M Wandler 11 abgespeichert. Im Block 17 erfolgt eine Normierung der in Block 16 abgespeicherten Frequenzspektren, indem die den jeweiligen Peak-Frequenzen $f_h$ zugehörigen Peak-Spitzenwerte durch die Stärke des den jeweiligen Peak-Frequenzen $f_h$ zugehörigen Rauschhintergrunds $PDS(f_h)$ dividiert werden. Es ergibt sich für jeden der M Wandler 11 ein normiertes Frequenzspektrum $L_m(f_h)$ mit H Peak-Frequenzen $f_h$. Diese Frequenzspektren $L_m(f_h)$ werden zur nachfolgenden Richtungsbildung im Blockschaltbild der Fig. 2 verwendet.

Die beschriebene Vorverarbeitung vor Richtungsbildung führt zu einer wesentlichen Erhöhung der Genauigkeit der Richtungsbildung, da zur Richtungsbildung nur die periodischen Signalanteile allein ohne das breitbandige Hintergrundrauschen benutzt und die periodischen Signalanteile mit den besten Signal-Stör-Verhältnissen ausgewählt werden, wodurch der Einfluß des breitbandigen Hintergrundrauschen verringert wird. Der Aufwand an Signalverarbeitung ist deutlich reduziert, da von den ausgewählten Spektrallinien nur deren Frequenzlage und die komplexe Amplitude im Maximum benutzt werden, was auch für breite Peaks gilt.

Die beschriebene Bestimmung der Peak-Frequenzen $f_h$ mit dem hier herrschenden Rauschhintergrund in dem Ausgangssignal eines einzigen Wandlers 11 ist - wie bereits erwähnt - besonders für räumlich kleine Antennen geeignet, da für das Empfangsgeräusch vereinfacht ebene Wellenausbreitung angenommen werden kann und das Leistungsdichtespektrum des Hintergrundgeräusch in allen Wandlern etwa gleich ist. Durch die Beschränkung auf nur ein Wandlerausgangssignal verringert sich der Signalverarbeitungsaufwand drastisch. Bei räumlich großen Antennen, wie sie z.B. bei Wasserschall durch langgestreckte Schleppantennen realisiert werden, muß der Pegel des Hintergrundrauschens für alle Wandler 11 getrennt in der beschriebenen Weise ermittelt werden.

Die Richtungsbildung unter Verwendung der normierten Frequenzspektren $L_m(f_h)$ erfolgt im Frequenzbereich im Block 18 in bekannter Weise durch Phasenverschiebung und Aufsummierung der Peaks in allen H normierten Frequenzspektren der Peak-Frequenzen $f_h$ über alle M Wandler 11, so daß für jede Peak-Frequenz $f_h$ ein Richtdiagramm $R_h(\varphi)$ entsteht. Entsprechend der H extrahierten Peak-Frequenzen $f_h$ sind insgesamt H Richtdiagramme $P_h(\varphi)$ vorhanden. In den Richtdiagrammen $P_h(\varphi)$ werden nunmehr die stärksten Peaks anhand der Größe und Lage des jeweiligen Maximums bestimmt, und im Block 19 wird der Richtungswinkel $\varphi_h$ im Maximum der Peaks extrahiert. Da jeweils nur die stärkste Richtung für eine Peak-Frequenz $f_h$ extrahiert wird, ergeben sich insgesamt H Peak-Richtungswinkel $\varphi_h$ für die Stelle, an der das Richtdiagramm der h-ten Linie den größten Wert annimmt.

Da für die niederfrequenten, periodischen Signalanteile die Hauptkeulen der Richtdiagramme $P_h(\varphi)$ im Maximum flach verlaufen ergibt sich eine Meßungenauigkeit, der durch eine Wichtung der extrahierten Peak-Richtungswinkel $\varphi_h$ Rechnung getragen wird. Hierzu wird im Block 20 eine Wichtungsfunktion $G(\varphi-\varphi_h)$ zur Verfügung gestellt, wie sie im Diagramm der Fig. 4 dargestellt ist. Mit dieser Funktion werden alle Richtdiagramme $P_h(\varphi)$ gewichtet, indem diese mit der Wichtungsfunktion multipliziert werden. Dadurch ergeben sich im Block 21 H gewichtete Richtdiagramme $B_h(\varphi)$, in dem die Richtkeule für die h-te Peakfrequenz $f_h$ sich aus dem Richtdiagramm $P_h(\varphi)$ multipliziert mit dem schmalen Gewichtungsfenster $G(\varphi-\varphi_h)$ für die Maßungenauigkeit in der Umgebung des Peak-Richtungswinkels ($\varphi_h$ ergibt. Außerhalb dieses Gewichtungsfensters gilt $B_h(\phi) = 0$.

Im Block 22 werden die gewichteten Richtdiagramme $B(\varphi)$ aufsummiert, das heißt für jede Richtung $\varphi$ die Richtkeulen $B_h(\varphi)$ aufsummiert, so dass ein Summen-Richtdiagramm $B(\varphi)$ entsteht, in dem sich die Schmalband-Richtkeulen $B_h(\varphi)$ eines Zielgeräusches in einer Richtung zu einem Zielpeak überlagern, der wiederum anhand der Größe und Lage des Maximums selektiert wird. Die Zahl der selektierten Peaks entspricht der Anzahl der detektierbaren und unterscheidbaren Ziele.

Von bisher bekannten Verfahren zur Richtungsbildung unterscheidet sich die vorstehend beschriebene Verfahrensweise dadurch, dass pro Peak-Frequenz nur ein Richtungswinkel für die stärkste Richtung ermittelt, pro Peak-Frequenz eine schmale Richtkeule um den so ermittelten Peak-Richtungswinkel ermittelt und die schmalen Richtkeulen aller Peak-Frequenzen aufsummiert werden. Dies bringt mehrere Vorteile mit sich: Eine breite Hauptkeule im Richtdiagramm für jede Peak-Frequenz wird durch einen Richtungswinkel ersetzt. Besonders bei einem hohen Signal-Stör-Verhältnis führt dies zu einer sehr genauen Stör-Winkelbestimmung. Unzuverlässige Richtungsschätzungen sind durch ein niedriges Signal-Stör-Verhältnis gekennzeichnet und haben ein geringes Gewicht. Die schmale Richtkeule um den extrahierten Richtungswinkel für jede Peak-Frequenz berücksichtigt die auch bei einem großen Signal-Stör-Verhältnis unvermeidbare Meßungenauigkeit. Die Höhe der Richtkeule gibt das Signal-Stör-Verhältnis an. Im Summen-Richtdiagramm mit den addierten Richtkeulen konzentrieren sich alle periodischen Anteile einer Signalquelle aus einer Richtung gemäß ihrem Signal-Stör-Verhältnissen. Die unterschiedlichen Fequenzen bewirken eine verbesserte Genauigkeit der Richtungsbestimmung. Der weitere Aufwand zur Signalverarbeitung reduziert sich beträchtlich, da nur die extrahierten Peaks im Summen-Richtdiagramm (entsprechend den möglichen Zielen) weiterbearbeitet werden müssen.

Die letzte Stufe der Signalverarbeitung geht von dem Summen-Richtdiagramm $B(\varphi)$ und den darin anhand der Größe und Lage des Maximums selektierten stärksten Peaks aus. Im Block 23 werden die Richtungswinkel im Maximum der Peaks, die Peak-Zielwinkel $\varphi_n$, extrahiert. Für die Peak-Zielwinkel $\varphi_n$ wird die Zielstärke $B(\varphi_n)$ für jeden der N Peak-Zielwinkel $\varphi_n$ bestimmt. Im Block 24 erfolgt eine Konfidenzbewertung der unter den Peak-Zielwinkeln $\varphi_n$ festgestellten Ziele aufgrund der Größe des Maximums $B(\varphi_n)$ im Summen-Richtdiagramm und der Anzahl der Summanden im Peak-Zielwinkel $\varphi_n$. Ein Beispiel für eine solche Konfidenzbewertung und der Bestimmung des Konfidenzmaßes $K_n$ ist in der DE 195 42 871 C1 (Fig. 2 und 3) beschrieben.

Auch hier wird wiederum die unvermeidbare Meßungenauigkeit dadurch berücksichtigt, daß der extrahierte Zielwinkel $\varphi_n$ durch eine schmale Richtkeule M $(\varphi)$ gewichtet wird. Die Wichtungsfunktion $M(\varphi-\varphi_n)$ wird im Block 25 zur Verfügung gestellt. Die Wichtung bzw. Gewichtung erfolgt im Block 26 durch Multiplikation des Summen-Richtdiagramms $B(\varphi)$ mit der Wichtungsfunktion $M(\varphi-\varphi_n)$. Zugleich wird im Block 26 das Summen-Richtdiagramm $B(\varphi)$ in der Umgebung der Peak-Zielfrequenzen $f_n$ auf das Maximum $B(\varphi_n)$ normiert. Durch diese Normierung und die Multiplikation mit der Konfidenz $K_n$ hat die Richtkeule $Z_n(\varphi)$ für den Zielwinkel $\varphi_n$ den maximalen Wert von $Z_n(\varphi_n) = K_n$. Insgesamt ergibt sich das Ergebnis der Richtungsbildung mit dem selektierten Ziel $Z_n(\varphi)$ für n = 1 bis N durch Multiplikation des normierten Summen-Richtdiagramms $B(\varphi)/B(\varphi_n)$ mit der Wichtungsfunktion $M(\varphi-\varphi_n)$ und dem Konfidenzmaß $K_n$.

Die beschriebene Zielselektion unterscheidet sich von bisher bekannten Verfahren dadurch, dass die Selektion der Ziele mit ihren Peilungen durch die Erkennung von Peaks in einem Summen-Richtdiagramm erfolgt, die Detektierbarkeit eines detektierten Ziels durch ein Konfidenzmaß zwischen 0 und 1 angegeben wird und pro selektiertem Zielpeak eine schmale Richtkeule M $(\varphi)$ um den Peak-Richtungswinkel $\varphi_n$ gebildet wird. Diese

Verfahrensweise hat die Vorteile, dass die Erkennung der Ziele vereinfacht wird, weil nur selektierte, voneinander unterscheidbare Ziele angezeigt werden. Hintergrundgeräusche sind vollständig eliminiert. Das Konfidenzmaß $K_n$ faßt die komplexe Situation bei der Richtungsbildung in eine leicht interpretierbare Zahl für die Erkennbarkeit des Ziels zwischen absolut unsicher (0) und absolut sicher (1) zusammen. In der Richtkeule eines Ziels im Summe-Richtdiagramm konzentrieren sich alle periodischen Anteile einer einzigen Signalquelle aus einer einzigen Richtung und die schmale Richtkeule entspricht der erzielbaren hohen Meßgenauigkeit. Scheinziele treten nicht auf.

Die Erfindung ist nicht auf das beschriebene Verfahren beschränkt. So kann bei allen entsprechenden Verfahrensschritten die Peakselektion anstelle durch Größe und Lage des Maximums anhand der Fläche und des Schwerpunktes der Peaks vorgenommen werden. Anstelle der Peak-Frequenzen werden Frequenzbereiche und anstelle der Peak-Richtungswinkel werden Winkelbereiche bestimmt und weiterverarbeitet. Bei der Konfidenzbewertung werden anstelle der Größe des Maximums der Peaks im Summen-Richtdiagramm die Fläche der Peaks berücksichtigt.

Weiterhin ist es möglich nicht unmittelbar die Ausgangssignale der elektroakustischen Wandler 11 der beschriebenen Signalverarbeitung zur Zieldetektion zu unterziehen, sondern die niederfrequente Einhüllende der Ausgangssignale. Hierzu durchlaufen die Ausgangssignale vor dem Block 12 bzw. 13 zunächst einen Hüllkurvendetektor und ggf. einen diesen vorgeschalteten Bandpaß und einen diesem nachgeschalteten Tiefpaß.

**Patentansprüche**

1. Verfahren zur Detektion und Ortung von Zielen mit periodische Signale abstrahlenden, akustischen Signalquellen, bei dem die akustischen Signale mittels einer eine Mehrzahl von elektroakustischen Wandlern (11) aufweisenden Antenne (10) empfangen und die elektrischen Ausgangssignale der Wandler (11) zur Zielextraktion einer Signalverarbeitung mit nachfolgenden Verarbeitungsschritten unterzogen werden:

   a) Bilden des jeweiligen Frequenzspektrums von den Ausgangssignalen aller elektroakustischen Wandler (Rm (f) mit m = 1 bis M),
   b) Selektieren der stärksten Peaks in mindestens einem Frequenzspektrum anhand der Größe und Lage des jeweiligen Maximums,
   c) Extrahieren der Frequenzen im Maximum der Peaks (Peak-Frequenz $f_h$ mit h = 1 bis H),
   d) Schätzen der den Peak-Frequenzen ($f_h$) zugehörigen Stärke des Rauschhintergrundes (PDS ($f_h$) mit h = 1 bis H),
   e) Extrahieren der den Peak-Frequenzen ($f_h$)

zugehörigen Peak-Spitzenwerte in allen Frequenzspektren (Peak-Spitzenwerte $R_m(f_h)$ mit m = 1 bis M und h = 1 bis H),

f) Normieren der Peak-Spitzenwerte mit dem der jeweiligen Peakfrequenz ($f_h$) zugehörigen Rauschhintergrund ($L_m(f_h) = R_m(f_h)/PDS(f_h)$ mit m = 1 bis M und h = 1 bis H),

g) Richtungsbildung im Frequenzbereich unter Verwendung der normierten Peak-Spitzenwerte ($L_m(f_h)$) zwecks Erzeugung eines Richtdiagramms ($P_h(\varphi)$ mit h ist = 1 bis H) für jede Peak-Frequenz ($f_h$),

h) Selektieren des stärksten Peaks in jedem Richtdiagramm ($P_h(\varphi)$) anhand der Größe und Lage des jeweiligen Maximums,

i) Extrahieren der Richtungswinkel im Maximum der Peaks (Peak-Richtungswinkel $\varphi_h$ mit h = 1 bis H),

j) Wichtung aller Richtdiagramme ($P_h(\varphi)$ mit schmalen Richtkeulen ($G(\varphi)$) um die Peak-Richtungswinkel ($\varphi_h$) zwecks Verringerung der Meßungenauigkeit für niederfrequente, periodische Signalanteile, deren Hauptkeulen in den Richtdiagrammen im Maximum flach verlaufen ($B_h(\varphi) = P_h(\varphi) \times G(\varphi - \varphi_0)$),

k) Summieren aller gewichteten Richtdiagramme zur Erzeugung eines Summen-Richtdiagramms

$$(B(\varphi) = \sum_{n=1}^{N} B_h(\varphi))$$

l) Selektieren der stärksten Peaks anhand der Größe und Lage des Maximums im Summen-Richtdiagramm ($B(\varphi)$),

m) Extrahieren der Richtungswinkel im Maximum der Peaks (Peak-Zielwinkel $\varphi_n$ mit n = 1 bis N),

n) Bestimmen der Größe der Maxima als Zielstärke.

2. Verfahren nach Anspruch 1, **gekennzeichnet durch** folgende, sich anschließende Verarbeitungsschritte:

- Wichtung des Summen-Richtdiagramms ($B(\varphi)$) mit schmalen Richtkeulen ($M(\varphi)$) um die Zielwinkel ($\varphi_n$),
- Konfidenzbewertung der Peak-Zielstärke und des Peak-Zielwinkels ($\varphi_n$) aufgrund der Größe des Maximums im Summen-Richtdiagramm ($B(\varphi)$) und der Anzahl der Summanden im Peak-Zielwinkel ($\varphi_n$) mit einem zwischen 0 und 1 liegenden Konfidenzmaß ($K_n$).

3. Verfahren nach Anspruch 2, **dadurch gekenn-**

**zeichnet, dass** das Summen-Richtdiagramm ($B(\varphi)$) mit den Peak-Zielwinkeln ($\varphi_n$) im Summen-Richtdiagramm zugehörigen Maxima normiert wird ($B(\varphi)/B(\varphi_n)$).

4. Verfahren nach einem der Ansprüche 1 bis 3, **dadurch gekennzeichnet, dass** die Selektion der stärksten Peaks, die Extraktion der Peak-Frequenzen ($f_h$) und das Schätzen der den Peak-Frequenzen ($f_h$) zugehörigen Stärke des Rauschhintergrundes PDS ($f_h$) im Frequenzspektrum aller Ausgangssignale der elektroakustischen Wandler (11) vorgenommen wird.

5. Verfahren zur Detektion und Ortung von Zielen mit periodische Signale abstrahlenden, akustischen Signalquellen, bei dem die akustischen Signale mittels einer eine Mehrzahl von elektroakustischen Wandlern (11) aufweisenden Antenne (10) empfangen und die elektrischen Ausgangssignale der Wandler (11) zur Zielextraktion einer Signalverarbeitung mit nachfolgenden Verarbeitungsschritten unterzogen werden:

a) Bilden des jeweiligen Frequenzspektrums von den Ausgangssignalen aller elektroakustischen Wandler ($Rm(f)$ mit m = 1 bis M),

b) Selektieren der stärksten Peaks in mindestens einem Frequenzspektrum anhand der aufintegrierten Gesamtleistung und des Schwerpunktes der Peaks,

c) Extrahieren von Frequenzbereichen der selektierten Peaks,

d) Schätzen der den Peak-Frequenzbereichen zugehörigen Stärke des Rauschhintergrundes,

e) Extrahieren der den Peak-Frequenzbereichen zugehörigen Peak-Spitzenwerte in allen Frequenzspektren,

f) Normieren der Peak-Spitzenwerte mit dem der jeweiligen Peakfrequenzbereich zugehörigen Rauschhintergrund,

g) Richtungsbildung im Frequenzbereich unter Verwendung der normierten Peak-Spitzenwerte zwecks Erzeugung eines Richtdiagramms für jeden PeakFrequenzbereich,

h) Selektieren des stärksten Peaks in jedem Richtdiagramm an hand der aufintegrierten Gesamtleistung und des Schwerpunktes des Peaks,

i) Extrahieren der Winkelbereiche der selektierten Peaks,

j) Wichtung aller Richtdiagramme mit schmalen Richtkeulen um die Peak-Richtungswinkelbereiche zwecks Verringerung der Meßungenauigkeit für niederfrequente, periodische Signalanteile, deren Hauptkeulen in den Richtdiagrammen im Maximum flach verlaufen,

k) Summieren aller gewichteten Richtdiagramme zur Erzeugung eines Summen-Richtdiagramms

$$\left(B(\varphi) = \sum_{n=1}^{N} B_h(\varphi)\right)$$

l) Selektieren der stärksten Peaks im Summen-Richtdiagramm (B($\varphi$)) an hand der aufintegrierten Gesamtleistung und des Schwerpunktes der Peaks,

m) Extrahieren der Richtungswinkelbereiche der selektierten Peaks,

n) Bestimmen der Gesamtleistung als Zielstärke.

**6.** Verfahren nach Anspruch 5, **gekennzeichnet durch** folgende, sich anschließende Verarbeitungsschritte:

- Wichtung des Summen-Richtdiagramms (B($\varphi$)) mit schmalen Richtkeulen (M($\varphi$)) um die Zielwinkel ($\varphi_n$),
- Konfidenzbewertung der Peak-Zielstärke und des Peak-Zielwinkels ($\varphi_n$) aufgrund der Gesamtleistung des Peaks im Summen-Richtdiagramm (B($\varphi$)) und der Anzahl der Summanden im Peak-Zielwinkel ($\varphi_n$) mit einem zwischen 0 und 1 liegenden Konfidenzmaß ($K_n$).

**7.** Verfahren nach einem der Ansprüche 1 bis 6, **dadurch gekennzeichnet, dass** anstelle der Ausgangssignale der elektroakustischen Wandler (11) deren Einhüllenden der Signalverarbeitung unterzogen werden.

**8.** Verfahren nach Anspruch 7, **dadurch gekennzeichnet, dass** die Ausgangssignale der elektroakustischen Wandler (11) einen Hüllkurvendetektor, einen diesem vorgeschalteten Bandpaß und einen diesem nachgeschalteten Tiefpaß, durchlaufen.

**Claims**

**1.** Method for detecting and locating targets with acoustic signal sources emitting periodic signals, in which the acoustic signals are received by means of an antenna (10) with a plurality of electro-acoustic transducers (11) and the electrical output signals of the transducers (11) are subjected to a signal processing with the following processing steps for the target extraction:

a) Formation of the respective frequency spectrum of the output signals of all electro-acoustic transducers (Rm (f) with m = 1 to M),

b) Selection of the strongest peaks in at least one frequency spectrum using the size and position of the respective maximum,

c) Extraction of the frequencies in the maximum of the peaks (peak frequency $f_h$ with h = 1 to H),

d) Estimation of the strength of the noise background (PDS ($f_h$) with h = 1 to H) associated with the peak frequencies ($f_h$),

e) Extraction of the peak-peak values associated with the peak frequencies ($f_h$) in all frequency spectra, (peak-peak values $R_m(f_h)$ with m = 1 to M and h = 1 to H),

f) Scaling of the peak-peak values with the noise background ($L_m(f_h) = R_m(f_h) / PDS(f_h)$ with m = 1 to M and h=1 to H) associated with the respective peak frequency ($f_h$),

g) Direction formation in the frequency range using the scaled peak-peak values ($L_m(f_h)$) for generating a directional diagram ($P_h(\varphi)$ with h = 1 to H) for each peak frequency ($f_h$),

h) Selection of the strongest peak in each directional diagram ($P_h(\varphi)$) using the size and position of the respective maximum,

i) Extraction of the bearing angles in the maximum of the peaks (peak bearing angle $\varphi_h$ with h = 1 to H),

j) Weighting of all directional diagrams ($P_h(\varphi)$) with narrow directional beams (G($\varphi$)) around the peak bearing angles ($\varphi_h$) to reduce the measuring inaccuracy for low-frequency periodic signal components, whose main beams are flat in the maximum in the directional diagrams ($B_h(\varphi) - P_h(\varphi) \times G(\varphi-\varphi_0)$),

k) Summation of all weighted directional diagrams to generate a summed directional diagram

$$\left(B(\varphi) = \sum_{n=1}^{N} B_h(\varphi)\right)$$

l) Selection of the strongest peak using the size and position of the maximum in the summed directional diagram (B($\varphi$)),

m) Extraction of the bearing angles in the maximum of the peaks (peak target angle $\varphi_n$ with n = 1 to N),

n) Determination of the size of the maxima as target strength.

**2.** Method according to Claim 1, **characterized by** the following subsequent processing steps:

- Weighting of the summed directional diagram (B($\varphi$)) with narrow directional beams (M($\varphi$)) around the target angles ($\varphi_n$),

- Confidence assessment of the peak target strength and the peak target angle ($\varphi_n$) based on the size of the maximum in the summed directional diagram (B($\varphi$)) and the number of summands in the peak target angle ($\varphi_n$) with a confidence degree ($K_n$) between 0 and 1.

3. Method according to Claim 2, **characterized in that** the summed directional diagram (B($\varphi$)) is scaled with maxima associated with the peak target angles ($\varphi_n$) in the summed directional diagram (B($\varphi$) / (B($\varphi_n$)).

4. Method according to one of Claims 1 to 3, **characterized in that** the selection of the strongest peaks, the extraction of the peak frequencies ($f_h$) and the estimation of the strength of the noise background PDS ($f_h$) associated with the peak frequencies ($f_h$) is effected in the frequency spectrum of all output signals of the electro-acoustic transducers (11).

5. Method for detecting and locating targets with acoustic signal sources emitting periodic signals, in which the acoustic signals are received by means of an antenna (10) with a plurality of electro-acoustic transducers (11) and the electrical output signals of the transducers (11) are subjected to a signal processing with the following processing steps for the target extraction:

a) Formation of the respective frequency spectrum of the output signals of all electro-acoustic transducers (Rm (f) with m = 1 to M),
b) Selection of the strongest peaks in at least one frequency spectrum using the integrated total output and the focus of the peaks,
c) Extraction of frequency ranges of the selected peaks,
d) Estimation of the strength of the noise background associated with the peak frequency ranges,
e) Extraction of the peak-peak values associated with the peak frequency ranges in all frequency spectra,
f) Scaling of the peak-peak values with the noise background associated with the respective peak frequency range,
g) Direction formation in the frequency range using the scaled peak-peak values for generating a directional diagram for each peak frequency range,
h) Selection of the strongest peak in each directional diagram using the integrated total output and the focus of the peak,
i) Extraction of the angle ranges of the selected peaks,
j) Weighting of all directional diagrams with narrow directional beams around the peak bearing angle ranges to reduce the measuring inaccuracy for low-frequency periodic signal components, whose main beams are flat in the maximum in the directional diagrams,
k) Summation of all weighted directional diagrams to generate a summed directional diagram

$$( B (\varphi) = \sum_{n=1}^{N} B_h (\varphi) )$$

l) Selection of the strongest peaks in the summed directional diagram (B($\varphi$)) using the integrated total output and the focus of the peaks,
m) Extraction of the bearing angle ranges of the selected peaks,
n) Determination of the total output as target strength.

6. Method according to Claim 5, **characterized by** the following subsequent processing steps:

- Weighting of the summed directional diagram (B($\varphi$)) with narrow directional beams (M($\varphi$)) around the target angles ($\varphi_n$),
- Confidence assessment of the peak target strength and the peak target angle ($\varphi_n$) based on the total output of the peak in the summed directional diagram (B($\varphi$)) and the number of summands in the peak target angle ($\varphi_n$) with a confidence degree ($K_n$) between 0 and 1.

7. Method according to one of Claims 1 to 6, **characterized in that** instead of the output signals of the electro-acoustic transducers (11) their envelopes are subjected to signal processing.

8. Method according to Claim 7, **characterized in that** the output signals of the electro-acoustic transducers (11) go through an envelope detector, a bandpass filter preconnected to this and a lowpass filter connected downstream of this.

**Revendications**

1. Procédé de détection et de localisation de cibles avec des sources de signaux sonores émettant des signaux périodiques avec lequel les signaux sonores sont reçus au moyen d'une antenne (10) présentant une pluralité de convertisseurs électroacoustiques (11) et les signaux de sortie électriques des convertisseurs (11) sont soumis, en vue de l'extraction de la cible, à un traitement de signal comprenant les étapes suivantes :

a) Formation du spectre de fréquences correspondant des signaux de sortie de tous les convertisseurs électroacoustiques (Rm (f) avec m = 1 à M),
b) Sélection de la crête la plus importante dans au moins un spectre de fréquences au moyen de la grandeur et de la position du maximum correspondant,

c) Extraction des fréquences au maximum de la crête (fréquences de crête $f_h$ avec h = 1 à H),

d) Évaluation de l'intensité du bruit de fond associé aux fréquences de crête ($f_h$) (PDS ($f_h$) avec h = 1 à H),

e) Extraction des valeurs de crête associées aux fréquences de crête ($f_h$) dans tous les spectres de fréquences (valeurs de crête $R_m$ ($f_h$) avec m = 1 à M et h = 1 à H),

f) Normalisation des valeurs de crête avec le bruit de fond associé à la fréquence de crête ($f_h$) correspondante ($L_m$ ($f_h$) = $R_m$ ($f_h$) / PDS ($f_h$)) avec m = 1 à M et h = 1 à H),

g) Calcul directionnel dans la plage de fréquences en utilisant les valeurs de crête normalisées ($L_m(f_h)$) en vue de générer un diagramme directionnel ($P_h(\varphi)$ avec h = 1 à H) pour chaque fréquence de crête ($f_h$),

h) Sélection de la crête la plus importante dans chaque diagramme directionnel ($P_h(\varphi)$) au moyen de la taille et de la position du maximum correspondant,

i) Extraction de l'angle directionnel au maximum de la crête (angle directionnel de crête $\varphi_h$ avec h = 1 à H),

j) Pondération de tous les diagrammes directionnels ($P_h(\varphi)$) ayant un lobe de rayonnement directionnel ($G(\varphi)$) étroit autour de l'angle directionnel de crête ($\varphi_h$) en vue de diminuer l'incertitude de mesure pour les composantes périodiques à basse fréquence du signal dont les lobes de rayonnement principaux dans les diagrammes directionnels s'étendent à plat au niveau du maximum ($B_h (\varphi) = P_h (\varphi) \times G (\varphi - \varphi_0)$),

k) Addition de tous les diagrammes directionnels pondérés pour générer un diagramme directionnel total

$$(B(\varphi) = \sum_{n=1}^{N} B_h(\varphi))$$

l) Sélection de la crête la plus importante au moyen de la grandeur et de la position du maximum dans le diagramme directionnel total ($B(\varphi)$),

m) Extraction de l'angle directionnel au maximum de la crête (angle de la cible de crête $\varphi_n$ avec n = 1 à N),

n) Détermination de la taille du maximum comme intensité de la cible.

2. Procédé selon la revendication 1, **caractérisé par** les étapes suivantes qui s'enchaînent :

- Pondération du diagramme directionnel total ($B(\varphi)$) avec des lobes de rayonnement directionnel ($M(\varphi)$) étroits autour de l'angle de la cible ($\varphi_n$),

- Évaluation de la confiance de l'intensité de cible de crête et de l'angle de cible de crête ($\varphi_n$) sur la base de la taille du maximum dans le diagramme directionnel total ($B(\varphi)$) et du nombre d'opérandes de l'addition dans l'angle de cible de crête ($\varphi_n$) avec un indice de confiance ($K_n$) compris entre 0 et 1.

3. Procédé selon la revendication 2, **caractérisé en ce que** le diagramme directionnel total ($B(\varphi)$) est normalisé avec les angles de cible de crête ($\varphi_n$) en les maximums associés au diagramme directionnel total ($B (\varphi) / B (\varphi_n)$).

4. Procédé selon l'une des revendications 1 à 3, **caractérisé en ce que** la sélection de la crête la plus importante, l'extraction des fréquences de crête ($f_h$) et l'évaluation de l'intensité du bruit de fond associé aux fréquences de crête ($f_h$) PDS ($f_h$) sont effectuées dans le spectre de fréquences de tous les signaux de sortie des convertisseurs électroacoustiques (11).

5. Procédé de détection et de localisation de cibles avec des sources de signaux sonores émettant des signaux périodiques avec lequel les signaux sonores sont reçus au moyen d'une antenne (10) présentant une pluralité de convertisseurs électroacoustiques (11) et les signaux de sortie électriques des convertisseurs (11) sont soumis, en vue de l'extraction de la cible, à un traitement de signal comprenant les étapes suivantes :

a) Formation du spectre de fréquences correspondant des signaux de sortie de tous les convertisseurs électroacoustiques (Rm (f) avec m = 1 à M),

b) Sélection de la crête la plus importante dans au moins un spectre de fréquences au moyen de la puissance totale intégrée et du barycentre de la crête,

c) Extraction des plages de fréquences de la crête sélectionnée,

d) Évaluation de l'intensité du bruit de fond associé aux plages de fréquences de crête,

e) Extraction des valeurs de crête associées aux plages de fréquences de crête dans tous les spectres de fréquences,

f) Normalisation des valeurs de crête avec le bruit de fond associé à la plage de fréquences de crête respective,

g) Calcul directionnel dans la plage de fréquences en utilisant les valeurs de crête normalisées en vue de générer un diagramme directionnel pour chaque plage de fréquences de crête,

h) Sélection de la crête la plus importante dans chaque diagramme directionnel au moyen de la puissance totale intégrée et du barycentre de la crête,

i) Extraction des plages d'angles de la crête sélectionnée,

j) Pondération de tous les diagrammes directionnels ayant un lobe de rayonnement directionnel étroit autour de la plage d'angles directionnels de crête en vue de diminuer l'incertitude de mesure pour les composantes périodiques à basse fréquence du signal dont les lobes de rayonnement principaux dans les diagrammes directionnels s'étendent à plat au niveau du maximum,

k) Addition de tous les diagrammes directionnels pondérés pour générer un diagramme directionnel total

$$(B(\varphi) = \sum_{n=1}^{N} B_h(\varphi))$$

l) Sélection de la crête la plus importante dans le diagramme directionnel total ($B(\varphi)$) au moyen de la puissance totale intégrée et du barycentre de la crête,

m) Extraction de la plage d'angles directionnels de la crête sélectionnée,

n) Détermination de la puissance totale comme intensité de la cible.

6. Procédé selon la revendication 5, **caractérisé par** les étapes suivantes qui s'enchaînent :

- Pondération du diagramme directionnel total ($B(\varphi)$) avec des lobes de rayonnement directionnel ($M(\varphi)$) étroits autour de l'angle de la cible ($\varphi_n$),
- Évaluation de la confiance de l'intensité de cible de crête et de l'angle de cible de crête ($\varphi_n$) sur la base de la puissance totale de la crête dans le diagramme directionnel total ($B(\varphi)$) et du nombre d'opérandes de l'addition dans l'angle de cible de crête ($\varphi_n$) avec un indice de confiance ($K_n$) compris entre 0 et 1.

7. Procédé selon l'une des revendications 1 à 6, **caractérisé en ce que** les enveloppantes des signaux de sortie sont soumises au traitement de signal au lieu des signaux de sortie des convertisseurs électroacoustiques (11).

8. Procédé selon la revendication 7, **caractérisé en ce que** les signaux de sortie des convertisseurs électroacoustiques (11) traversent un détecteur de courbe d'enveloppe, un filtre passe-bande branché en amont de celui-ci et un filtre passe-bas branché en aval de celui-ci.

$$L_m(f_n) = \frac{R_m(f_n)}{PDS(f_n)}$$

Fig. 1

Fig. 4

Fig. 2

Fig. 3